(19) Europäisches Patentamt

European Patent Office

Office européen des brevets

(11) **EP 2 347 241 B1**

(12) **FASCICULE DE BREVET EUROPEEN**

(45) Date de publication et mention
de la délivrance du brevet:
**19.08.2015 Bulletin 2015/34**

(21) Numéro de dépôt: **09752210.6**

(22) Date de dépôt: **15.10.2009**

(51) Int Cl.:
***G01N 11/04*** *(2006.01)*

(86) Numéro de dépôt international:
**PCT/FR2009/001210**

(87) Numéro de publication internationale:
**WO 2010/043788 (22.04.2010 Gazette 2010/16)**

(54) **DISPOSITIF ET PROCEDE DE MESURE DE LA VISCOSITE D'UN FLUIDE**

VORRICHTUNG UND VERFAHREN ZUR MESSUNG DER VISKOSITÄT EINER FLÜSSIGKEIT

DEVICE AND METHOD FOR MEASURING THE VISCOSITY OF A FLUID

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **15.10.2008 FR 0805718**

(43) Date de publication de la demande:
**27.07.2011 Bulletin 2011/30**

(73) Titulaire: **Centre National de la Recherche
Scientifique
75016 Paris (FR)**

(72) Inventeurs:
 • **AURADOU, Harold Roland Bernard
  91120 Palaiseau (FR)**
 • **HULIN, Jean-Pierre François
  F-94100 Saint-Maur-des-Fosses (FR)**
 • **SEMIN, Benoît Bernard Joseph
  F-57320 Vaudreching (FR)**

(74) Mandataire: **Corret, Hélène
  Cabinet Orès
  36, rue de St Pétersbourg
  75008 Paris (FR)**

(56) Documents cités:
**EP-A1- 1 674 865          EP-A2- 1 927 842
WO-A1-98/38477          GB-A- 2 129 144
US-A- 3 285 058          US-A- 4 750 351
US-A1- 2003 033 859     US-B1- 6 755 079**

• **RICHOU ET AL: "drag force on a circular cylinder
  midway between two parallel plates at Re<<1 part
  2: moving uniformly (numerical and
  experimental)" CHEMICAL ENGINEERING
  SCIENCE, vol. 60, 2005, pages 2535-2543,
  XP002530819**
• **D'ANGELO, AURADOU ET AL: "single fiber
  tranport by a fluid in a fracture with rough walls:
  influence of the fluid rheology" PHYSICS.FLU-
  DYN, 2 septembre 2008 (2008-09-02), pages 1-12,
  XP002530820**
• **HUI LIU ET AL: "On the translation of a cylinder
  in a long tube" PHYSIC OF FLUIDS, vol. 16, no. 4,
  avril 2004 (2004-04), pages 998-1007,
  XP002530923**
• **WEI-CHIH WANG ET AL.: "fluid viscosity
  measurement using forward light scattering"
  MEAS. SCIE. TECHNOLOGY, vol. 10, 1999, pages
  316-322, XP002530933**

**Description**

La présente invention concerne un procédé de mesure de la viscosité d'un fluide, ainsi qu'un dispositif correspondant.

On connaît déjà de nombreux viscosimètres qui peuvent être utilisés dans des laboratoires ou encore pour des applications industrielles.

On connaît des viscosimètres à chute de bille, dans lesquels une bille est lâchée dans un tube contenant le fluide, la vitesse limite étant mesurée pour en déduire la viscosité du fluide.

Ce viscosimètre permet d'obtenir des mesures relativement précises. Cependant, il est peu précis pour des fluides présentant une faible viscosité, comme l'eau. Par ailleurs, ce dispositif ne peut, en pratique, être utilisé que dans un laboratoire. Enfin, il nécessite l'utilisation de plusieurs billes et tubes pour couvrir une large gamme de viscosité.

Il existe aussi des viscosimètres capillaires, dont le fonctionnement est basé sur l'écoulement d'un fluide, provoqué à travers un capillaire en exerçant une surpression. La viscosité du fluide peut être déduite du débit volumique, lequel dépend à la fois de la viscosité du fluide et de la surpression.

Ces viscosimètres manquent de précision lorsqu'ils sont utilisés pour des produits dont la viscosité peut varier dans une gamme importante.

On peut également citer les viscosimètres rotatifs qui permettent de mesurer ou d'imposer une contrainte sur une surface connue (cône, plan ou cylindre par exemple) et d'estimer le gradient de vitesse, supposé constant entre les deux surfaces, à partir d'une vitesse de rotation imposée ou mesurée.

Ce viscosimètre est basé sur l'utilisation d'une cuve ou de mobiles tournants. Les pièces mécaniques de construction doivent être réalisées et positionnées avec précision et nécessitent l'utilisation de dispositifs de rotation à très faible frottement qui sont d'un coût élevé.

Les viscosimètres vibrants comportent une partie active qui est une tige vibrante. Ils permettent de mesurer l'amplitude de la vibration, laquelle varie en fonction de la viscosité du fluide.

Par ailleurs, de façon générale, les viscosimètres précédents sont essentiellement utilisés dans des laboratoires et sont peu adaptés à des applications industrielles et/ou à des mesures en continu. Ce sont également des appareils d'un coût de revient élevé, en raison des tolérances exigées sur leurs pièces mécaniques constitutives. Ce sont donc des appareils qui nécessitent un entretien très rigoureux, notamment lorsque les mesures de viscosité doivent être effectuées sur des fluides susceptibles de les détériorer. De surcroît, ils ne permettent généralement d'obtenir des mesures avec une précision suffisante que dans une gamme de viscosité limitée.

On peut également citer le document US-4,750,351 qui décrit un viscosimètre utilisant une mesure de pression différentielle entre l'entrée et la sortie d'un tube dans lequel circule un gaz.

L'écoulement du gaz à l'intérieur du tube n'est pas laminaire sur la partie d'entrée du tube, ce qui perturbe la mesure et donc réduit considérablement la précision du viscosimètre.

Le document US-6,755,079 décrit un viscosimètre utilisant également une mesure de pression différentielle entre l'entrée et la sortie d'un tube dans lequel circule un fluide.

Compte tenu de la structure du viscosimètre, l'écoulement du fluide ne peut se produire que dans un seul sens. Par ailleurs, ce document indique que le nombre de Reynolds est supérieur à 2000. L'écoulement du fluide dans le tube ne peut être laminaire pour un nombre de Reynolds important, ce qui réduit là encore la précision du viscosimètre.

Enfin, le document WO 98/38477 décrit un appareil pour mesurer la viscosité apparente de particules en suspension dans un milieu. Cet appareil comporte une pale mobile entre une position rétractée à l'intérieur de l'appareil et une position déployée. Dans la position déployée, la pale est placée dans la conduite, à l'intérieur de laquelle circule le milieu dont le sens d'écoulement est fixé. L'appareil mesure la force de cisaillement exercée sur la pale.

Cependant, les caractéristiques de l'écoulement diffèrent depuis les parois de la conduite vers le centre de celle-ci. Ainsi, la force de cisaillement varie le long de la pale et l'appareil donne une valeur peu précise de la viscosité du milieu. Cet appareil est ainsi destiné essentiellement à la détermination de viscosités élevées.

L'invention a pour objet de pallier ces inconvénients en proposant un procédé de mesure de la viscosité d'un fluide pouvant être mis en oeuvre pour des fluides de viscosité comprise dans une large gamme et notamment pour des fluides dont la viscosité est faible, cette mesure étant réalisée avec une précision acceptable de l'ordre du pourcent, ce procédé pouvant être utilisé aussi bien pour des fluides newtoniens que pour des fluides non newtoniens.

L'invention concerne également un viscosimètre mettant en oeuvre ce procédé. Ce viscosimètre est d'un coût réduit, du fait notamment que ses pièces constitutives n'exigent pas de tolérances très précises, et il peut être utilisé aussi bien dans un laboratoire que dans un cadre industriel.

Ainsi, l'invention concerne un procédé de mesure de la viscosité d'un fluide tel que defini dans la revendication 1.

Dans l'ensemble de la description, on entend par « élément allongé », un élément présentant une longueur $\ell'$ et un diamètre d et dont la partie immergée présente une longueur $\ell$, rapport $\ell/d$ étant compris entre 10 et 100.

Ce procédé consiste donc à établir un écoulement laminaire dans une géométrie confinée, l'écoulement étant ainsi dominé par la viscosité et non par l'inertie du fluide, et ceci pour une large gamme de débits.

De surcroit, cet procédé ne nécessite aucune pièce en mouvement, qu'il s'agisse de mouvements de rotation ou de vibration. Ce procédé est donc nécessairement d'une mise en oeuvre simplifiée par rapport aux méthodes classiques de mesure de la viscosité.

La mesure de la viscosité consiste à mettre en oeuvre les étapes (b) et (c) successivement pour différentes positions dudit élément allongé dans ledit canal, selon la dimension transverse caractéristique D, lorsque le rapport D/d est suffisamment grand, typiquement supérieur à 5 dans le cas où le canal du viscosimètre est cylindrique.

Ceci permet de mesurer la force de friction (f) et donc la viscosité dynamique en fonction de la position de l'élément allongé selon la dimension transverse du canal et donc en fonction du profil de vitesse de l'écoulement. Pour une même vitesse moyenne, la viscosité peut alors être déterminée pour différents taux de cisaillement.

Lorsque le fluide est newtonien, les étapes (a) à (c) peuvent n'être mises en oeuvre que pour une seule valeur de la vitesse moyenne de l'écoulement ($U$), tout en fournissant une mesure de la viscosité présentant une précision appropriée.

Lorsque le fluide est non newtonien, les étapes (a) à (c) sont mises en oeuvre successivement avec différentes valeurs de la vitesse moyenne de l'écoulement ($U$).

Le procédé consiste alors à fournir une courbe de la viscosité en fonction de la vitesse moyenne de l'écoulement, courbe qui peut ensuite être utilement analysée pour déterminer les caractéristiques du fluide.

Lorsque le fluide est non newtonien et pour un rapport D/d suffisamment grand, typiquement supérieur à 5 dans le cas où le canal du viscosimètre est cylindrique, le procédé est avantageusement mis en oeuvre de façon à obtenir une courbe de la viscosité en fonction de la vitesse moyenne de l'écoulement, pour différentes positions de l'élément allongé selon la dimension transverse du canal, le débit étant fixe ou pour différents débits, la position de l'élément allongé étant fixe.

Le procédé selon l'invention peut avantageusement être mis en oeuvre de façon continue.

L'invention concerne également un viscosimètre tel que défini dans la revendication 5.

Ledit élément allongé peut être flexible. Grâce à cette flexibilité, l'élément allongé peut s'aligner facilement selon la direction longitudinale dudit canal, sous l'effet de l'écoulement du fluide.

A titre d'exemple, on peut citer les fils de polyester, de caoutchouc et de nylon.

Ce viscosimètre peut comporter une pompe à débit imposé pour assurer la circulation du fluide.

Dans une première variante de viscosimètre, le canal est défini par l'espace libre entre deux plaques sensiblement parallèles.

Dans une deuxième variante, le canal est défini par une cuve cylindrique.

Compte tenu des coûts faibles de fabrication du viscosimètre selon l'invention, le canal et l'élément allongé peuvent être à usage unique. Ceci permet de s'affranchir des opérations de nettoyage, après les opérations de mesure. Ceci peut se révéler également extrêmement utile dans le domaine médical, lorsque le viscosimètre selon l'invention est, par exemple, utilisé pour mesurer la viscosité d'un échantillon de sang.

L'invention sera mieux comprise et d'autres buts, avantages et caractéristiques de celle-ci apparaîtront plus clairement à la lecture de la description qui suit et qui est faite au regard des dessins annexés sur lesquels:

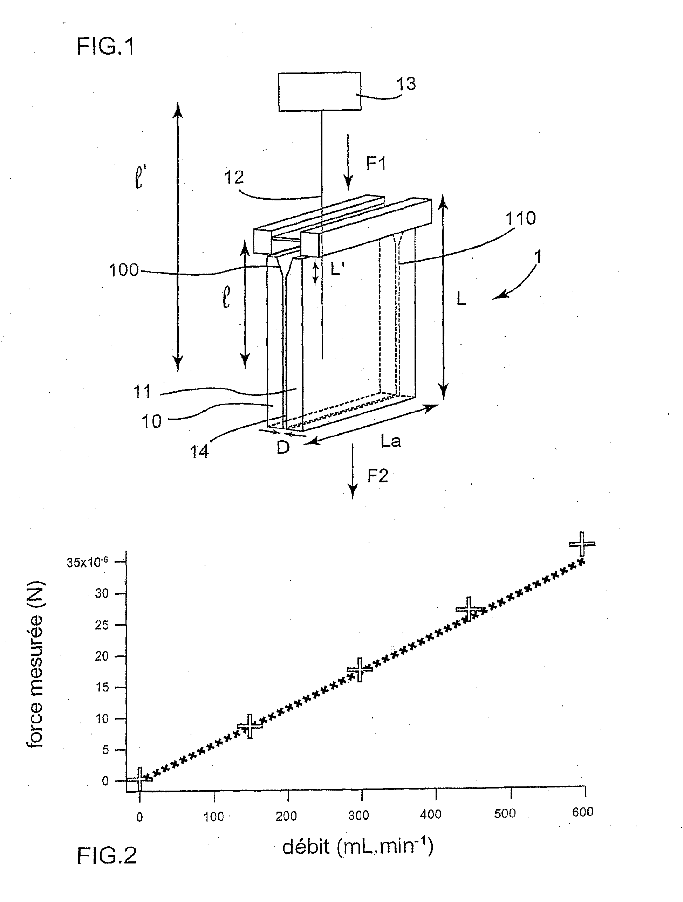

- la figure 1 est une vue schématique en perspective d'un exemple de viscosimètre selon l'invention,
- la figure 2 est une courbe représentant la force (en N) exercée sur l'élément allongé utilisé dans le viscosimètre illustré à la figure 1, en fonction du débit de l'écoulement de fluide (en mL.min$^{-1}$), lorsque l'élément allongé est un cylindre de verre de diamètre égal à 1,5 millimètres, et que le fluide est de l'eau,

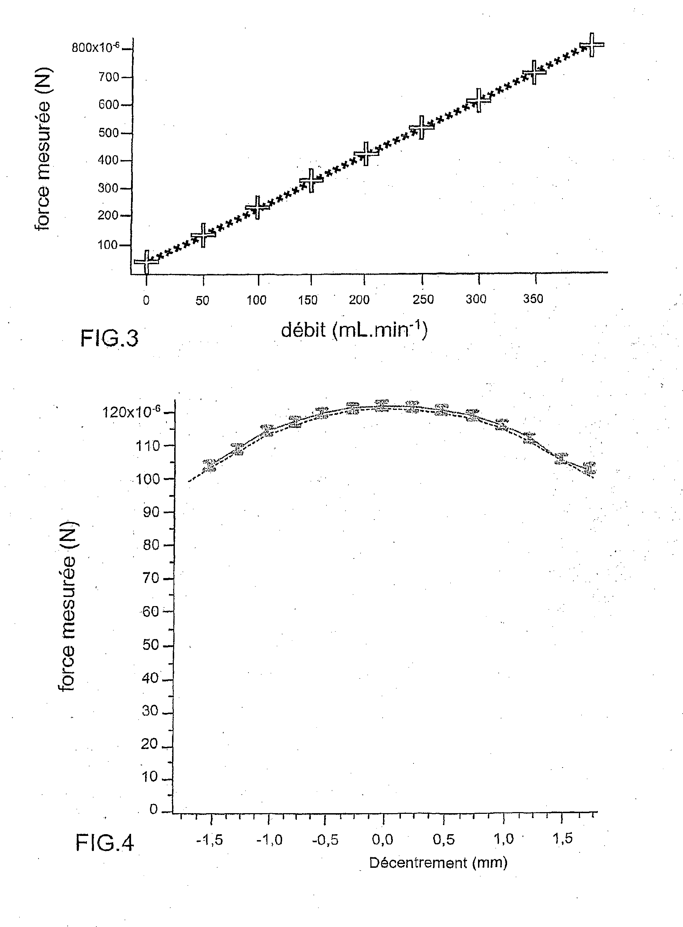

- la figure 3 est une courbe représentant la force (en N) exercée sur un cylindre de cuivre de diamètre de 2 millimètres disposé dans le dispositif illustré à la figure 1, en fonction du débit (en mL.min$^{-1}$), et que le fluide est un mélange eau/glycérol (25%/75%),
- la figure 4 est une courbe représentant la force (en N) exercée sur un cylindre de verre de diamètre de 1,5 millimètres placé dans le dispositif illustré à la figure 1, en fonction de son décentrement (ou encore de sa position par rapport au plan de symétrie du canal de ce dispositif),

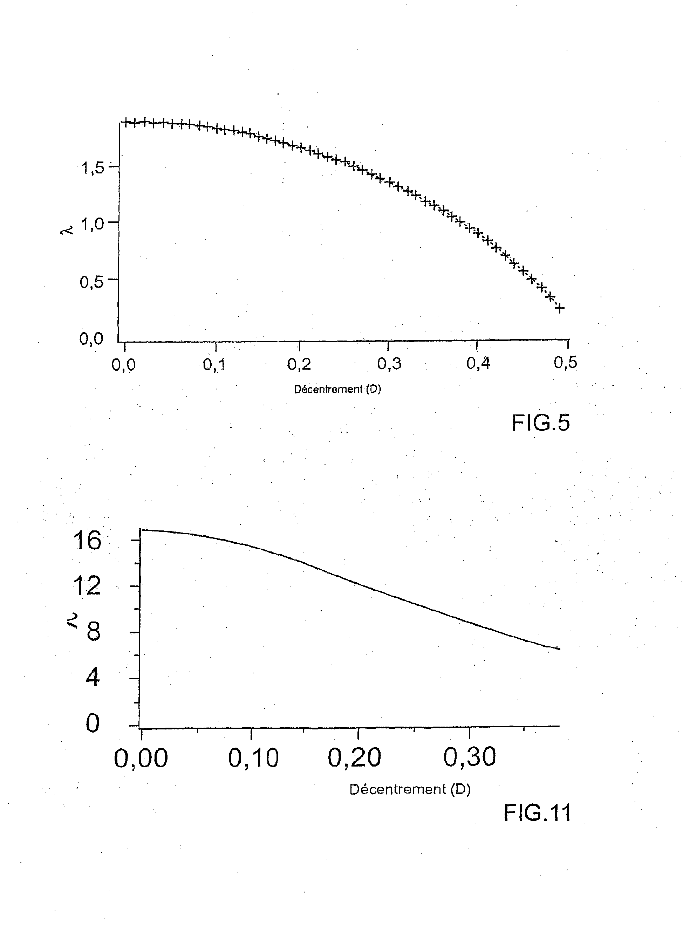

- la figure 5 est une courbe déterminée par modélisation numérique représentant le facteur géométrique $\lambda$. en fonction du décentrement d'un élément cylindrique dans un dispositif tel qu'illustré à la figure 1 (ou encore de la position de cet élément par rapport au plan de symétrie du canal du dispositif), pour D/d=100, le décentrement étant exprimé en fonction de D, et

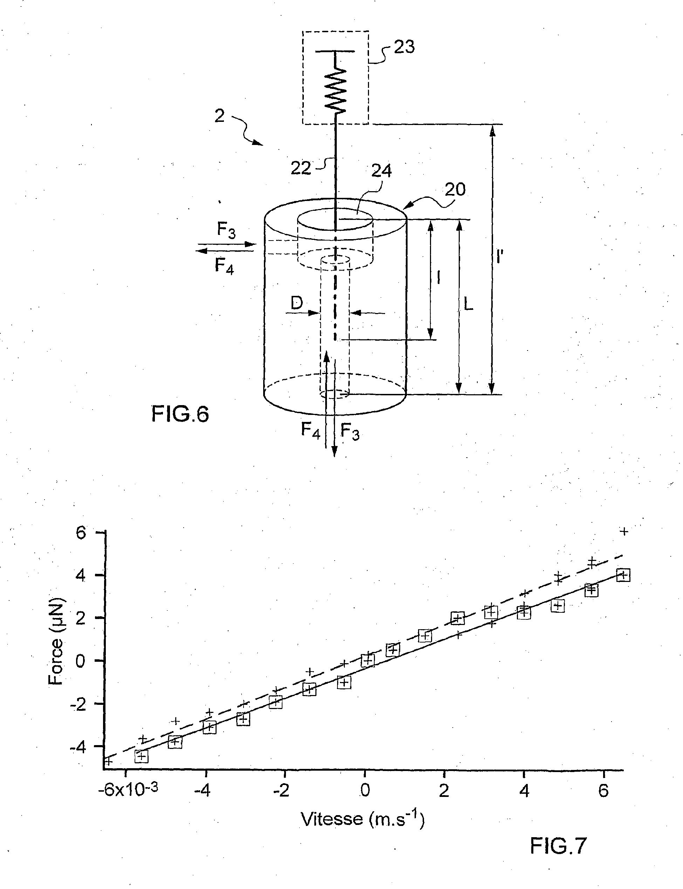

- la figure 6 est une vue schématique en perspective d'un autre exemple de viscosimètre selon l'invention,
- la figure 7 est une courbe représentant l'évolution de la force (en $\mu$N) exercé sur l'élément allongé du viscosimètre illustré à la figure 6, en fonction de la vitesse de l'écoulement (en m.s$^{-1}$), lorsque l'élément est un cylindre métallique de diamètre égal à 1mm, le fluide étant de l'eau,

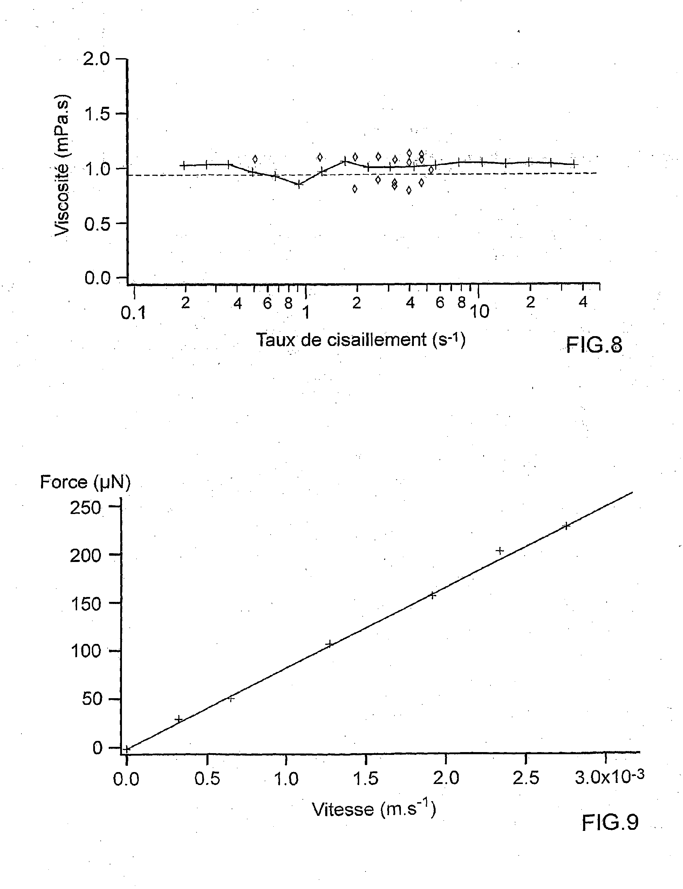

- la figure 8 illustre les valeurs de viscosité (mPa.s) de l'eau obtenues avec le viscosimètre illustré à la figure 6 et correspondant aux résultats de la figure 7 (points ♦) et celles obtenues avec un viscosimètre rotatif Contraves Low-shear 30 (points +), en fonction du taux de cisaillement (s$^{-1}$) ;

- la figure 9 est une courbe représentant l'évolution de la force (en $\mu$N) exercée sur l'élément allongé du viscosimètre illustré à la figure 6, en fonction de la vitesse de l'écoulement (en m.s$^{-1}$), lorsque l'élément est un cylindre métallique de diamètre égal à 1 mm, le fluide étant un mélange eau/glycérol (15%, 85%),

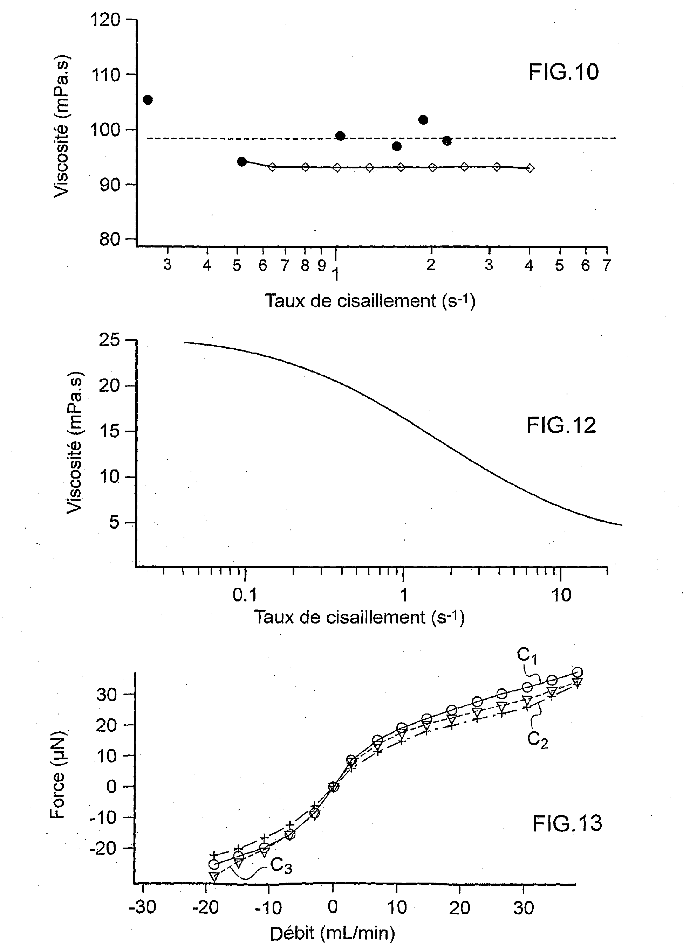

- la figure 10 illustre, en fonction du taux de cisaillement (s$^{-1}$), les valeurs de viscosité (mPa.s) du mélange eau/glycérol (15%/85%) obtenues avec le viscosimètre illustré à la figure 6 et correspondant aux résultats de la figure 9 (points ●) et celles obtenues avec un rhéomètre MCR501 d'Anton Paar (points 0), la droite en traits pointillés représentant une valeur de la littérature,
- la figure 11 est une courbe représentant le facteur géométrique $\lambda$ en fonction du décentrement d'un élément cylindrique dans un viscosimètre comportant un canal défini par un tube (ou encore de la position dudit élément par rapport au centre de ce tube), pour D/d=5, le décentrement étant exprimé en fonction de D.
- la figure 12 est une courbe représentant l'évolution de la viscosité (mPa.s) en fonction du taux de cisaillement (s$^{-1}$) pour un fluide non newtonien, obtenue par un viscosimètre Low-shear et,
- la figure 13 comporte trois courbes $C_1$, $C_2$ et $C_3$ représentant l'évolution de la force ($\mu$N) en fonction du débit de l'écoulement (mUmin), $C_1$ correspondant aux résultats illustrés à la figure 12 illustre la force équivalente théorique obtenue à partir de la courbe rhéologique du fluide en écoulement dans le viscosimètre et $C_2$ et $C_3$ correspondant à des essais réalisés avec le viscosimètre illustré à la figure 6 et pour le même fluide non newtonien.

Le viscosimètre 1 représenté schématiquement à la figure 1 comporte deux plaques 10 et 11, qui sont sensiblement identiques. Ces plaques présentent des surfaces en regard 100 et 110 sensiblement lisses et parallèles sauf aux extrémités. Dans cette zone, une forme en Y a été choisie pour faciliter la mise en place de l'élément allongé. La suppression de cette zone ou le changement de sa géométrie peuvent être avantageusement effectués.

Ces deux faces en vis-à-vis définissent un canal 14 utilisé pour l'écoulement d'un fluide. Elles sont écartées d'une distance D, dénommée dimension transverse ou ouverture caractéristique du canal.

Le viscosimètre décrit à la figure 1 comporte également un élément allongé qui prend ici la forme d'un fil 12. Comme illustré à la figure 1, l'élément allongé 12 présente une longueur $\ell'$, une partie $\ell'$ de cette longueur étant placée dans le canal 14 défini par les plaques 10 et 11. Bien entendu, lorsque l'élément 12 est complètement immergé dans le liquide, $\ell = \ell'$.

Cet élément 12 est placé sensiblement au centre du canal 14, ce qui exclut tout contact entre cet élément et les parois du canal.

Les plaques présentent une longueur L qui peut être mesurée à partir du niveau du fluide. Si la longueur L' de l'entrée du canal est suffisamment faible par rapport à la longueur $L$ du canal 14 et si L' est suffisamment petit devant la partie $\ell$ de l'élément qui est immergée, les effets d'entrée sont négligeables. La deuxième condition est notamment remplie, pour le viscosimètre illustré à la figure 1, lorsque L' < 0,3 $\ell$.

L'élément allongé 12 est relié à un capteur de force 13. La liaison est réalisée de façon à ce que la force mesurée soit la force réelle exercée sur les parois de l'élément allongé.

L'ensemble est placé sur une table de déplacement - non représentée sur la figure 1 - qui permet de déplacer l'élément allongé dans l'ouverture et selon la dimension transverse D. La force peut alors être mesurée pour différents placements dans l'ouverture caractéristique du canal.

L'élément allongé peut prendre des formes différentes, notamment celle d'un cylindre, par exemple en verre ou en métal, ou même se présenter sous la forme de brins torsadés.

De façon générale, il n'est pas nécessaire d'avoir un écoulement de fluide à l'intérieur du tube.

On considérera que la section de cet élément présente une dimension transverse caractéristique $d$, laquelle correspondra au diamètre dans le cas d'un cylindre ou encore la plus grande dimension dans la section transversale, si la section n'est pas régulière comme cela est le cas pour des brins torsadés.

Des moyens, non représentés sur la figure 1, assurent la circulation d'un fluide dans ledit canal, selon les flèches $F1$ et $F2$ illustrées à la figure 1, l'écoulement du fluide étant en régime laminaire. Le sens de l'écoulement peut être inversé.

Les dimensions caractéristiques $D$ et $d$ du canal 14 défini par les plaques et de l'élément allongé 12 sont choisies de telle sorte que le rapport $D/d$ est inférieur ou égal à 100.

Le dispositif illustré à la figure 1 définit alors une géométrie dite confiée. Grâce à cela, l'écoulement laminaire du fluide dans le canal 14 dépend essentiellement de la viscosité du fluide et non de son inertie. Ainsi, lorsqu'un écoulement de fluide en régime laminaire est mis en place dans une géométrie confinée, il existe une relation simple reliant la viscosité du fluide à la force de frottement visqueux exercée sur l'élément allongé placé dans un écoulement de ce fluide. Cette relation est la suivante :

$$(1) \quad f = \lambda \eta \ell U$$

où

f est la force exercée sur l'élément allongé;
$U$ est la vitesse moyenne de l'écoulement (moyenne spatiale de la vitesse sur la dimension D),
$\eta$ est la viscosité,
$\lambda$ est un facteur géométrique qui peut être déterminé avec précision, soit par simulation numérique, soit par calibration.

Dans le cas où les effets de bouts sont négligeables et pour des rapports D/d<5, le facteur géométrique $\lambda$ varie de manière approximativement affine avec le rapport d/D. Lorsque l'élément est en outre au centre du canal, c'est-à-dire sur le plan de symétrie du canal, parallèle aux plaques 10 et 11, alors $\lambda$ suit la relation (observée numériquement et expérimentalement) : $\lambda$=2.1+13.8 d/D.

La relation (1) est valable pour un fluide newtonien, c'est-à-dire de viscosité constante. Il sera expliqué dans la suite de la description comment un fluide non newtonien peut être analysé grâce à cette relation.

Par ailleurs, il faut que $\ell$/D soit suffisamment grand (>5, par exemple) pour pouvoir considérer que l'écoulement est bidimensionnel et que $\lambda$ est indépendant de $\ell$/D. Pour un fluide newtonien et des nombres de Reynolds faibles (Re<0.1) est si on procède à un étalonnage du dispositif, cette condition n'est pas nécessaire.

On rappelle ici que le nombre de Reynolds Re est défini par la relation :

$$(2)\ Re=\frac{\rho UD}{\eta}$$

où

p est la masse volumique du fluide,
$\eta$ est la viscosité dynamique du fluide,
U est la vitesse moyenne de l'écoulement et
D la dimension caractéristique de l'ouverture du canal dans lequel le fluide s'écoule.

Avant d'examiner plus en détail les résultats obtenus expérimentalement, il est utile de rappeler que le nombre de Reynolds permet de déterminer les effets qui dominent l'écoulement des fluides, à savoir les effets inertiels ou visqueux.

On peut considérer que, lorsque le nombre de Reynolds est inférieur à 20, les effets inertiels apparaissant dans l'écoulement sont négligeables. Ainsi, l'écoulement est dominé par les effets visqueux et la force exercée sur l'élément allongé placé dans l'écoulement a un comportement linéaire par rapport à la vitesse moyenne d'écoulement du fluide.

On peut également considérer que le procédé selon l'invention permet d'obtenir des informations intéressantes lorsque les valeurs du nombre de Reynolds sont inférieures à 50. De façon générale, il est possible de déterminer expérimentalement le nombre de Reynolds (et donc le débit) maximal pour lequel les effets d'inertie peuvent toujours être négligés.

On se réfère maintenant à la figure 2 qui concerne des résultats expérimentaux obtenus en utilisant le viscosimètre illustré à la figure 1, présentant une dimension caractéristique $D$ égale à 5 millimètres, et dans lequel est placé un cylindre en verre de diamètre $d$ égal à 1,5 millimètres. Ce cylindre en verre est placé au centre du canal 14 défini entre les plaques 10 et 11. Le fluide utilisé est l'eau.

Le capteur de force 13 mesure la force hydrodynamique exercée sur l'élément allongé.

La figure 2 donne les points de mesure (+) de la force exprimée en newtons exercée sur ce cylindre, en fonction du débit du fluide, lequel est proportionnel à la vitesse du fluide, lors d'essais réalisés avec de l'eau distillée et à une température de 20.0 °C.

La courbe illustrée en pointillés correspond à une régression linéaire, basée sur les premiers points de mesure (pour les débits les plus faibles).

Cette courbe confirme que la variation de la force en fonction du débit est bien linéaire. La pente de cette droite permet de déterminer la viscosité.

Pour la courbe illustrée à la figure 2, la viscosité mesurée est de 1,1 mPa.s.

Le point de mesure correspondant à un débit supérieur à 500mL.min-1 s'écarte de la courbe en pointillés, correspondant à la régression linéaire.

Ceci confirme que, pour des débits élevés, les effets inertiels ne peuvent plus être négligés. A titre d'indication, pour un débit de 300 mL.min[-1], le nombre de Reynolds vaut déjà environ 50, pour le viscosimètre utilisé

Bien entendu, compte tenu de la définition du nombre de Reynolds, ces effets inertiels peuvent être réduits si la dimension caractéristique D du dispositif de mesure est également réduite.

La figure 3 donne les résultats expérimentaux obtenus avec le viscosimètre illustré à la figure 1, dans lequel est placé un cylindre en cuivre d'un diamètre d égal à 2 millimètres. Ce cylindre en cuivre est placé de façon sensiblement centrée dans le canal 14, la dimension caractéristique D du dispositif étant dans ce cas égale à 5 millimètres. Le fluide utilisé est un mélange eau/glycérol (fluide newtonien), la part de glycérol étant d'environ 75% en masse, et la température est de 21.9°C.

Les points de mesure sont illustrés par des croix (+), tandis que la courbe noire en pointillés correspond à un ajustement linéaire de la courbe.

Là encore, on observe une variation linéaire de la force avec le débit, la pente de cette droite permettant de déterminer la viscosité. La valeur de la viscosité mesurée est de 35,2 mPa.s.

La figure 3 montre que, dans cette expérience, les points de mesure ne s'écartent pas de la courbe de régression linéaire, même pour des débits élevés.

Dans cette expérience, le nombre de Reynolds est, en pratique, toujours inférieur à 5.

Le résultat illustré aux figures 2 et 3 montre que, quel que soit le fluide newtonien (comme l'eau et l'huile ordinaire) utilisé, on observe bien une variation linéaire de la force exercée sur le tube avec le débit.

Donc, pour de tels fluides et comme c'est le cas dans les figures 2 et 3, une seule mesure à un débit donné est suffisante pour obtenir la valeur de la viscosité du fluide. En effet, la valeur de la force mesurée est proportionnelle au débit, tant que l'effet de la viscosité est dominant par rapport aux effets inertiels.

Le fait que la relation (1) est linéaire pour un fluide newtonien implique qu'elle reste vraie, si le débit ou encore la vitesse n'est pas constant au cours du temps. Il suffit alors de remplacer dans la relation (1) la vitesse et la force par leurs moyennes dans le temps.

Le dispositif selon l'invention permet ainsi de mesurer la viscosité d'un fluide newtonien, même si le débit de l'écoulement dans le dispositif n'est pas constant. Ceci peut notamment se produire avec des écoulements pulsés, ou encore avec des écoulements produits par des pompes péristaltiques.

Il est maintenant fait référence à la figure 4 qui concerne d'autres résultats d'expériences qui ont été réalisées pour mettre en évidence l'influence de la position de l'élément allongé dans le canal du dispositif illustré à la figure 1.

Ainsi, la figure 4 donne des points de mesure (illustrés par des barres grises (I)) de la force exercée sur un tube de verre d'un diamètre $d$ de 1,5 millimètres placé dans le canal 14 du dispositif 1 de dimension caractéristique $D$ égale à 5 millimètres, la position étant comptée par rapport au plan de symétrie du canal, situé à égale distance des deux plaques 10 et 11. La distance entre le tube et le centre du canal, ou encore le décentrement du tube, peut varier entre -1,75 et 1,75 millimètres.

Les mesures ont été effectuées pour un fluide composé d'un mélange d'eau et de glycérol, la concentration en glycérol étant de 75,7% en masse et la température étant de 21.4°C.

Les barres verticales grises représentées sur la figure 4 indiquent la dispersion maximale des mesures effectuées, tandis que la courbe grise correspond aux mesures expérimentales.

Sur la figure 4, est également illustrée une courbe noire en pointillés correspondant aux valeurs de la viscosité calculées par simulation numérique de l'écoulement. A partir de D, d et du décentrement de l'élément allongé, il est possible (calcul numérique) de calculerer λ, en fonction de décentrement. Ensuite, on utilise la relation (1). Les deux courbes sont sensiblement superposées puisqu'elles sont confondues à 3% près. Dans l'exemple de viscosimètre illustré à la figure 1, la largeur La des plaques ou du canal est de 9 cm et son effet n'est pas pris en compte dans le calcul numérique. Ceci démontre que, tant que la largeur La est grande vis-à-vis de la dimension D du canal, c'est principalement cette dernière qui domine la mesure : la dimension La a alors un effet négligeable.

De surcroît, dans une plage de 1,6 millimètres (entre -0,8 et 0,8 millimètre), la force mesurée varie de moins de 5% par rapport à la valeur au centre du canal. Ceci montre que le facteur géométrique λ ne dépend que faiblement de la position du tube dans le canal, au voisinage du centre du canal ainsi que d'éventuelles irrégularités des parois du canal et du tube.

La figure 5 donne, en fonction du décentrement et pour un rapport D/d=100, les variations du facteur géométrique λ. Le facteur géométrique λ est obtenu par modélisation numérique utilisant la méthode des éléments finis, en fonction du décentrement normalisé par D d'un élément cylindrique (i.e. de la distance séparant l'axe longitudinal de l'élément du plan de symétrie de parois illustrées par les références 100 et 110 de la figure 1). Le décentrement est, dans cette figure, adimensionné par la distance D séparant les deux parois. Le décentrement est nul quand l'élément est à mi-distance entre les parois et est maximal lorsque l'élément allongé touche l'une des parois (l'élément est alors en contact avec la paroi sur toute sa longueur). Dans ce cas, le décentrement maximal est de (D-d)/2D≈0.5.

Pour des raisons de symétrie et comme le montre la figure 4, le facteur géométrique (ou la force de friction) ne dépend pas du signe du décentrement. Ainsi; seules les valeurs de décentrement positif sont indiquées sur la figure 5.

Ces résultats démontrent clairement que, tant que le décentrement est inférieur à ±0.1D (soit ±10d), le facteur géométrique varie peu (moins de 5% par rapport à sa valeur au centre). Ceci montre la robustesse de la méthode vis-à-vis d'une imprécision sur le centrage de l'élément allongé. En effet, la mesure donne des résultats fiables même en cas de petites imprécisions de positionnement.

Pour des rapports D/d>5 et croissants, la mesure deviendra de plus en plus sensible au profil de vitesse dans l'ouverture du canal. La variation de la mesure de la force avec le déplacement dans l'ouverture pourra être avantageusement utilisée pour obtenir la variation de la viscosité en fonction du taux de cisaillement.

Ceci entraîne plusieurs conséquences.

Tout d'abord la mise en oeuvre du procédé selon l'invention avec un dispositif tel que celui illustré à la figure 1 permet d'obtenir des mesures correctes, sans que l'élément allongé dans le canal soit nécessairement exactement centré dans le canal.

De surcroît, la surface de l'élément allongé ne doit pas nécessairement être très régulière.

Ainsi, les expériences ont montré que des mesures pouvaient même être valablement effectuées avec un élément allongé formé de plusieurs monobrins torsadés. Dans ce cas, la section de l'élément allongé n'est pas circulaire. Cependant, le facteur λ peut être calculé précisément en utilisant le diamètre moyen de l'élément.

De façon générale, l'état de surface de l'élément allongé et des parois du canal ne nécessite pas des tolérances très précises. Ceci a bien sûr des conséquences avantageuses en termes de coûts de fabrication du viscosimètre selon l'invention.

Par ailleurs, les expériences réalisées ont également montré que la matière constitutive de l'élément allongé est indifférente. Dans les résultats reportés aux figures 2 et 3, l'élément allongé est réalisé en verre ou en cuivre. On peut également envisager d'utiliser un élément allongé formé de brins de polyester torsadés, tel qu'un fil de couture.

Ceci contribue également à réduire les coûts de fabrication du viscosimètre selon l'invention.

On se réfère maintenant au tableau ci-dessous (tableau 1) qui illustre la précision qui peut être obtenue grâce au procédé et au viscosimètre selon l'invention.

| Fluide utilisé | Viscosité mesurée | Viscosité attendue |
|---|---|---|
| Eau (figure 2) | 1,1mPa.s | 1,0mPa.s |
| Mélange eau glycérol (75,7%) (figure 3) | 35,2mPa.s | 34,5mPa.s |
| Mélange eau glycérol (52,3%) (figure 4) | 6,7mPa.s | 6,5mPa.s |

Ainsi, pour chacun des fluides utilisés, le tableau 1 donne la viscosité mesurée en utilisant le procédé et le viscosimètre selon l'invention, conformément aux résultats expérimentaux figurant sur les figures 2 à 4. Il donne également la valeur de viscosité obtenue à partir des tables et des mesures de densité et de températures des fluides utilisés. A titre d'indication, ces tables peuvent être disponibles à l'adresse suivante http:/www.dow.com/glycérine/resources/table18. htm.

La comparaison entre ces valeurs montre que les valeurs de viscosité mesurée sont très proches des valeurs de référence. De surcroît, l'incertitude sur ces valeurs ne varie pas sur la gamme de viscosités étudiée. Les autres expériences qui ont été menées confirment le constat résultant des expériences rapportées précédemment.

De surcroît, sont disponibles sur le marché des capteurs de force permettant de mesurer des forces dans une gamme très étendue. On peut par exemple citer une balance (Sartorius CP 225D) qui permet de mesurer des forces allant de $10^{-7}$ à $8 \, 10^{-1}$ newtons, ce qui correspond à des poids apparents allant de $10^{-5}$ à 80 grammes.

Ceci contribue à permettre des mesures de valeur de viscosité dans une gamme importante, avec une précision sensiblement constante.

Ainsi, par rapport aux viscosimètres connus, comme les viscosimètres vibrants, le viscosimètre selon l'invention peut permettre de mesurer des viscosités très faibles, comme celle de l'eau.

Il résulte de la description qui précède que le viscosimètre selon l'invention ne comporte aucune pièce mécanique en mouvement, qu'il s'agisse de mouvements de rotation ou de vibrations. Ceci a des conséquences également en termes de coûts de fabrication du viscosimètre, dans la mesure où des pièces fixes demandent un usinage moins précis que des pièces en rotation ou en vibration. De surcroît, les risques de pannes sont ainsi extrêmement limités.

Dans l'exemple illustré à la figure 1, le viscosimètre est réalisé à partir de deux plaques en regard définissant un canal. On peut légalement envisager de réaliser un viscosimètre dont le canal est défini par un tube.

Ainsi, le viscosimètre 2 illustré à la figure 6 comporte une cuve cylindrique 20 définissant un canal 24 pour l'écoulement d'un fluide. Le diamètre D du canal correspond à la dimension caractéristique du canal.

Le viscosimètre 2 comporte également un élément allongé constitué ici d'un cylindre 22 de diamètre ou encore de dimension caractéristique d. Il présente une longueur ℓ' dont une partie ℓ est immergée dans le canal 24. La longueur L du canal est toujours plus grande que ℓ.

L'élément allongé est placé sensiblement au centre du canal 24, ce qui exclut tout contact avec les parois du canal.

L'élément 22 est relié à un capteur de force 23, ici une balance de précision, de façon à ce que la force mesurée soit la force réelle exercée sur les parois de l'élément.

Des moyens (non illustrés) assurent la circulation d'un fluide dans le canal 24, selon la flèche $F_3$ correspondant à une injection du fluide ou selon la flèche F4 correspondant à une aspiration du fluide. Dans les deux cas, l'écoulement du fluide est en régime laminaire.

Comme décrit précédemment en référence à la figure 1, le rapport D/d est inférieur ou égal à 100.

A titre d'exemple, le diamètre D du canal est de 1cm, le diamètre d du cylindre est de 1 mm, la longueur $\ell$' du cylindre est de 11 cm et la partie $\ell$ immergée est de 7 cm.

Comme expliqué précédemment, tant que les effets inertiels de l'écoulement sont négligeables (Re<50 voire Re<20), la force f mesurée par le capteur 23 est définie par la relation (1), ce qui permet de déterminer la viscosité du fluide, une fois le facteur géométrique $\ell$ déterminé.

Cette détermination peut être réalisée soit par calibration avec un fluide de viscosité connue, soit numériquement.

Dans ce dernier cas, le champ de vitesse est calculé en résolvant l'équation de Stokes (les effets inertiels sont ici négligeables) :

$$-\overrightarrow{grad}\, P + \eta\, \Delta \vec{V} = 0 \qquad (3)$$

La vitesse de l'écoulement ne varie que selon la distance radiale r, comptée à partir de l'axe longitudinal :

$$\eta\, \Delta V_z(r) = \frac{\partial P}{\partial z} = cste = b \qquad (4)$$

Pour un fluide newtonien, la solution analytique peut être utilisée pour avoir Vz(r) car la viscosité a une valeur constante.

Pour des fluides non newtoniens, cette expression 2D est résolue de manière itérative grâce au logiciel Freefem++ afin d'obtenir la vitesse Vz(r). La viscosité dépend dans ce cas du taux de cisaillement. Cette nouvelle contrainte implique, à chaque itération, une estimation du champ de viscosité.

La force s'exerçant sur l'élément allongé est la somme de deux contributions une de pression et une de friction. L'équation générale de la force f est de la forme :

$$f = \ell\; \left[\underbrace{\pi r^2 b}_{\text{Forces de pression}} + \underbrace{\oint_C \eta\left(\frac{\partial V_z}{\partial x}\, n_x + \frac{\partial V_z}{\partial y}\, n_y\right)}_{\text{Forces de friction}}\right] \qquad (5)$$

l'intégrale étant calculée sur le contour du cylindre.

Il suffit pour un fluide de viscosité connue, une vitesse imposée U et une longueur connue $\ell$ de calculer la force f : le facteur géométrique $\lambda$ est alors obtenu en calculant le rapport f/ $\eta$U$\ell$.

On se réfère à la figure 7 qui illustre des résultats expérimentaux obtenus en utilisant le viscosimètre illustré à la figure 6, présentant une dimension caractéristique D égale à 1 cm et dans lequel est placé un cylindre métallique de diamètre d égal à 1 mm. Ce cylindre est placé au centre du canal 24. Le fluide utilisé est l'eau.

Dans ces conditions, le facteur géométrique est estimé à 9,9, par application de la méthode numérique précédemment exposée.

Les essais ont été réalisés en faisant varier le sens de l'écoulement (injection du fluide F3 : vitesse positive ; aspiration du fluide F4 : vitesse négative), et pour deux températures différentes du fluide (22,6°C et 22,8°C).

La masse mesurée par la balance 23 permet de déterminer la force hydrodynamique exercée sur l'élément 22.

La figure 7 donne les points de mesure (+ pour la température de 22,6°C et ⊞ pour la température de 22,8°C) de la force exprimée en $\mu$N en fonction de la vitesse de l'eau (ms$^{-1}$).

Les courbes (en trait continu pour la température de 22,8°C et en traits pointillés pour la température de 22,6°C) correspondent à une régression linéaire.

Les courbes confirment là encore que la variation de la force en fonction de la vitesse est bien linéaire. La pente de la droite et la relation (1) permettent de mesurer la viscosité.

Ainsi, la viscosité mesurée est de 0.982 mPa.s à 22,6°C et de 0.9238 mPa.s à 22,8°C. Ces valeurs mesurées peuvent être comparées aux valeurs tabulées correspondantes (0.942 mPa.s à 22,6°C et 0.937 mPa.s à 22,8°C).

Pour mieux apprécier l'a précision des valeurs obtenues avec le viscosimètre selon l'invention, des mesures comparatives avec un viscosimètre rotatif Contraves Low-shear 30 ont été effectuées pour la température de 22.6 °C. Le taux de cisaillement dans le canal 24 est déterminé en utilisant la relation suivante :

$$\dot{\gamma} = \frac{4Q}{\pi R^3} \qquad\qquad (6)$$

Avec :

$\dot{\gamma}$ taux de cisaillement
Q : débit volumique appliqué dans la cellule
R : rayon de la cellule

La figure 8 donne les valeurs de viscosité de l'eau obtenues avec le viscosimètre selon l'invention (♦) et avec le viscosimètre Contraves Low-shear 30 (+), en fonction du taux de cisaillement.

La courbe en trait continu relie les points correspondant au viscosimètre Contraves Low-shear 30.

Par ailleurs, la droite en traits pointillés illustre la valeur tabulée de la viscosité de l'eau qui est de 0.942 mPa.s à la température de 22,6°C.

La figure 8 montre que l'écart de mesure sur la viscosité de l'eau avec le viscosimètre selon l'invention est faible (au maximum de 10%) par rapport aux mesures obtenues avec le viscosimètre Low Shear alors que ce viscosimètre est d'un coût élevé et d'une utilisation relativement complexe. Cette erreur de mesure pourrait être réduite en réalisant un meilleur contrôle de la température.

D'autres essais ont été réalisés avec le viscosimètre illustré à la figure 6, dans les conditions indiquées pour la figure 7, le fluide utilisé étant un mélange glycérol / eau à 85% en masse de glycérol.

La viscosité tabulée de ce mélange à la température de mesure (23°C) est de 98,4 mPa.s.

Les forces obtenues sur le cylindre avec ce mélange sont détaillées sur la figure 9.

La figure 9 montre là encore que la variation de la force en fonction de la vitesse de l'écoulement est bien linéaire. La pente de cette droite permet de déterminer la viscosité qui est de 96,9 mPa.s

La comparaison avec la valeur tabulée de la viscosité (98,4 mPa.s) montre que la valeur de la viscosité mesurée avec le viscosimètre selon l'invention est très proche de la valeur de référence.

Pour mieux apprécier la précision des valeurs obtenues avec le viscosimètre selon l'invention, à partir des valeurs de forces, la viscosité dynamique a été calculée grâce à l'équation (1). Ces résultats ont été comparés à la valeur tabulée et aux mesures réalisées sur le rhéomètre MCR501 d'Anton Paar.

La figure 10 donne les valeurs de la viscosité du mélange considéré obtenues avec le viscosimètre selon l'invention (points •) et avec le rhéomètre MCR501 (points ◊), en fonction du cisaillement.

La courbe en trait continu relie les points correspondant au rhéomètre MCR501.

Par ailleurs, la droite en traits pointillés illustre la valeur tabulée de la viscosité du mélange (98,4 mPa.s).

La figure 10 montre que le viscosimètre selon l'invention permet d'avoir des valeurs proches de la viscosité tabulée (en moyenne à 3% près et au maximum à 7 % près). En ce qui concerne les mesures effectuées au rhéomètre Anton Paar, elles sont inférieures de 5% à celles tabulées.

Cet essai comparatif montre que la viscosité selon l'invention permet de déterminer la viscosité du fluide avec une meilleure précision que le rhéomètre Anton Paar. Ce constat devrait encore être renforcé pour des fluides ayant une faible viscosité.

Une conséquence importante du procédé selon l'invention est qu'elle permet de réduire de façon considérable la taille du viscosimètre. Ceci permet de réaliser des mesures sur des petits volumes de fluides, sans conséquence sur la précision de la valeur de la force mesurée.

Par analyse dimensionnelle (vérifiée expérimentalement) on peut démontrer que le facteur géométrique λ dépend a priori de ℓ/D, D/d et du rapport du décentrement et de D. En pratique, si le rapport ℓ/D est très grand, par exemple supérieur à 50, le facteur géométrique λ en dépend peu. Lorsque l'élément allongé est placé entre deux plaques parallèles (comme illustré par la figure 1), la variation de λ avec le décentrement est particulièrement faible lorsque l'on place l'élément allongé au voisinage du centre des plaques. Ce point est illustré par la figure 4 qui montre (pour D/d = 3) que λ varie continûment en fonction du décentrement, avec un maximum au centre et des variations faibles (moins de 5%).

Ce point est de surcroît démontré dans le cas où D/d=100 par la figure 5 qui donne les variations du facteur géométrique λ en fonction du décentrement. Sur une large plage allant de -0.1 D à 0.1 D, ce facteur varie de moins de 5%. Pour cette géométrie, le décentrement affecte peu la mesure et λ est principalement fonction du rapport D/d, quel que soit le décentrement. En conséquence, la mesure est faiblement affectée par une mauvaise mise en place de l'objet.

Dans le cas où le cylindre est placé dans un tube, il conviendra que le rapport D/d soit supérieur à 5, si l'on souhaite que la force mesurée au voisinage du centre dépende peu de l'exactitude de la position de l'élément allongé.

Cette situation est illustrée par la figure 11 qui donne les variations de λ pour D/d=5, en fonction du décentrement.

Pour des raisons de symétrie et comme pour la figure 5, seules les valeurs de décentrement positif sont indiquées sur la figure 11. Le facteur géométrique λ est obtenu par modélisation numérique utilisant la méthode des éléments finis, en fonction du décentrement normalisé par D de l'élément cylindrique. Ici, ce dernier est placé à l'intérieur d'un tube ou canal de diamètre D, les deux axes étant parallèles et le rapport des diamètres choisi égal à D/d=5. Le décentrement correspond, dans cette situation, à la distance séparant l'axe longitudinal de l'élément cylindrique de l'axe de symétrie du tube. Le décentrement est ainsi nul quand les deux axes sont superposés et sa valeur maximale est atteinte lorsque l'élément allongé touche la paroi intérieure du tube. Dans ce cas, le décentrement maximal normalisé par le diamètre D est (D-d)/D=0.4.

Dans ce cas, le facteur géométrique et donc la force (qui lui est proportionnelle) varie de moins de 10% lorsque l'élément allongé est décentré de 0.1 D.

Pour un viscosimètre du type illustré à la figure 1 avec un canal défini par des plaques parallèles, dès que D/d>5 (situation pour laquelle les variations de la force dans l'ouverture deviennent supérieures à 5%), les variations de force dans l'ouverture deviendront appréciables. La mesure des variations de la force en fonction de la position de l'objet dans l'ouverture du canal, selon la dimension transverse, pourra alors être avantageusement utilisée pour déterminer les caractéristiques rhéologiques du fluide, en fonction du taux de cisaillement qui varie dans l'ouverture.

Une conséquence importante, lorsque l'élément est centré, est que, si la vitesse moyenne de l'écoulement ($U$), la longueur ($\ell$) de la partie immergée de l'élément allongé et le rapport des dimensions caractéristiques $d/D$ restent les mêmes, lorsque le rapport $\ell/D$ est supérieur à 50, le dispositif peut être miniaturisé ; cette miniaturisation n'ayant pratiquement pas de conséquence sur les valeurs de force mesurées.

Par exemple, pour une longueur $\ell$ égale à 2 centimètres et une vitesse $U$ donnée, la force mesurée $f$ sera quasiment la même pour un cylindre de diamètre $d$ = 1 mm dans un tube de diamètre $D$ = 2 mm que pour un cylindre de diamètre $d$ = 100 μm placé dans un tube de diamètre $D$ = 200 μm. Par contre, le volume de fluide utilisé pour la mesure est diminué par un facteur 100.

Cette miniaturisation est également rendue possible par le fait que le viscosimètre selon l'invention ne comporte pas de pièces en mouvement.

Ceci contribue encore à diminuer les coûts de fabrication d'un viscosimètre selon l'invention.

De surcroît, on peut envisager de réaliser des viscosimètres selon l'invention avec des pièces définissant le canal pour le fluide ainsi qu'un élément allongé qui sont à usage unique.

Ceci peut être particulièrement utile lorsque des mesures doivent être réalisées avec des fluides susceptibles de détériorer les pièces formant le canal ainsi que l'élément allongé placé dans celui-ci. Cet avantage peut également se révéler extrêmement utile dans le domaine médical, où il est souvent nécessaire d'utiliser des dispositifs à usage unique.

La description qui précède a concerné essentiellement des fluides newtoniens. Cependant, le procédé selon l'invention peut également trouver application pour des fluides non newtoniens.

Pour ces derniers, la force exercée sur l'élément allongé du viscosimètre varie de façon non-linéaire avec la vitesse de l'écoulement : la viscosité du fluide dépend du taux de cisaillement.

Pour un fluide non newtonien, le procédé est appliqué successivement à différentes valeurs de la vitesse de l'écoulement, soit en mesurant la force tout en déplaçant l'élément allongé dans l'ouverture du canal et sans modifier la vitesse de l'écoulement ou en mesurant la force pour différents débits et en maintenant fixe la position de l'élément allongé.

Il s'agit d'une vitesse moyennée spatialement et a priori instantanée en temps. Il est de toute façon possible ensuite de prendre une moyenne temporelle si cela simplifie l'exploitation des résultats. Le viscosimètre permet alors de fournir une courbe donnant la variation de la force mesurée en fonction du débit, ou de la position dans l'ouverture.

Les informations obtenues peuvent alors être classiquement traitées à partir de modèles mathématiques connus.

Des essais ont été réalisés avec une solution aqueuse de scléroglucane à 250 ppm, un polysaccharide neutre.

La courbe rhéologique obtenue avec le viscosimètre Low-shear, représentée sur la figure 12, démontre bien la nature rhéofluidifiante du fluide.

Les points de mesure (●) peuvent être ajustés par une loi de type Carreau :

$$\eta = \frac{\eta_0 - \eta_\infty}{1 + (\frac{\dot{\gamma}}{\dot{\gamma}_0})^{1-\alpha}} + \eta_\infty \qquad (7)$$

où $\eta$, $\eta_0$, $\eta_\infty$ symbolisent respectivement la viscosité dynamique, la viscosité sur le plateau newtonien et la viscosité pour un taux de cisaillement $\dot{\gamma}$ infini. $\dot{\gamma}_0$ est le taux de cisaillement correspondant à la transition entre deux régimes d'écoulement (plateau newtonien / régime en loi de puissance). Les valeurs de ces coefficients obtenues grâce au viscosimètre Low-shear sont détaillées dans le tableau 2.

| $\dot{\gamma}_0$ (s$^{-1}$) | $\eta_0$ (Pa.s) | $\eta_\infty$ (Pa.s) | $\alpha$ |
|---|---|---|---|
| 1.55 | 26×10$^{-3}$ | 2.78×10$^{-3}$ | 0.07 |

La loi rhéologique, donnée par l'équation (6), a été ensuite réinjectée dans le logiciel Freefem ++ pour estimer numériquement les forces de friction s'appliquant sur le cylindre intérieur (cf. équation (5)).

Par ailleurs, deux essais ont été effectués, à la même température et pour le même fluide, avec le viscosimètre illustré à la figure 6, avec un élément allongé dont le diamètre d est de 1 mm et la partie immergée $\ell$ est de 7 cm.

La figure 13 illustre la courbe $C_1$ (-●-) obtenue à partir de la courbe rhéologique illustrée à la figure 12, ainsi que les courbes $C_2$ (-+-) et C3 (-▼-) correspondant aux essais réalisés avec le viscosimètre selon l'invention.

La comparaison entre ces trois courbes montre que les résultats obtenus avec le viscosimètre selon l'invention ont une bonne corrélation avec la force calculée numériquement avec Freefem++. La différence maximale entre les valeurs numériques et les valeurs expérimentales est de 7 %.

Ainsi, le viscosimètre selon l'invention permet des mesures sur des fluides newtoniens et non newtoniens pour des viscosités allant par exemple de moins de 1 mPa.s à 100 mPa.s. Grâce à ce système, des mesures en continu, précises et rapides (quelques secondes) peuvent être réalisées facilement.

De plus, le procédé selon l'invention a l'avantage d'être utilisable quelle que soit la taille de la cellule ou du canal de mesure : la force est proportionnelle à la vitesse d'écoulement (qui est inversement proportionnelle à la section de la cuve ou du canal). Le fait de miniaturiser le viscosimètre permet donc d'obtenir à débit identique des forces au moins aussi importantes que pour le viscosimètre qui a fait l'objet des essais. Les quantités de fluide utilisées dans un dispositif miniaturisé peuvent être alors de l'ordre du mL.

Les applications du viscosimètre miniaturisé pourront être des mesures sur des fluides, éventuellement non newtoniens, coûteux ou difficiles à obtenir en grandes quantités.

Le procédé et le viscosimètre selon l'invention sont essentiellement destinés à la mesure de la viscosité de liquides.

Le procédé selon l'invention présente un autre avantage qui est la possibilité de mesurer en continu et avec des pas de temps réduits, l'évolution de la viscosité. Cet avantage est essentiel pour certaines applications (notamment en génie des procédés). Avec les viscosimètres capillaires, à bille et à coupelle, la mesure en continu est au contraire très difficile.

Dans les expériences réalisées, le temps de réponse est d'environ 0,2 seconde. Il s'avère essentiellement limité par l'interfaçage de la pompe et de la balance avec le dispositif de contrôle et d'enregistrement. Cependant, une augmentation de la cadence d'acquisition des mesures est tout à fait possible, ainsi que l'interfaçage avec une table de déplacement permettant de contrôler le déplacement de l'élément allongé dans l'ouverture du canal.

De façon générale, on sait que la viscosité de certains fluides peut évoluer dans le temps. Dans le cadre de l'invention, cette évolution au cours du temps peut être mesurée depuis la mise en l'écoulement du fluide.


**Revendications**

1.  Procédé de mesure de la viscosité d'un fluide comportant les étapes suivantes :

   (a) mise en place d'un écoulement dudit fluide en régime laminaire, à l'intérieur d'un canal (14, 24) de dimension transverse caractéristique D, dans lequel est placé, sensiblement selon la direction longitudinale dudit canal, et sensiblement au centre du canal, un élément allongé (12, 22) de dimension caractéristique d et dont une partie $\ell$ de la longueur est immergée dans ledit canal, le rapport D/d étant supérieur à 5,
   (b) mesure de la force de friction (f) exercée par ledit fluide sur les parois dudit élément allongé,
   (c) calcul de la viscosité dynamique ($\eta$) dudit fluide à partir de la relation :

$$(1)\ f = \lambda \eta \ell U$$

où
$U$ est la vitesse moyenne de l'écoulement et
$\lambda$ est un facteur géométrique,

les étapes (b) et (c) étant mises en oeuvre successivement pour différentes positions dudit élément allongé dans ledit canal, selon la dimension transverse caractéristique D.

2.  Procédé selon la revendication 1 dans lequel les étapes (a) à (c) sont mises en oeuvre pour une seule valeur de $U$, lorsque le fluide est newtonien.

3.  Procédé selon la revendication 1, dans lequel les étapes (a) à (c) sont mises en oeuvre successivement avec différentes valeurs de $U$, lorsque le fluide est non newtonien.

4.  Procédé selon l'une des revendications 1 à 3, **caractérisé en ce qu'**il est mis en oeuvre en continu.

5.  Viscosimètre mettant en oeuvre le procédé de mesure selon l'une des revendications 1 à 4, comportant :

    - un canal (14, 24) d'ouverture caractéristique D et de longueur L,
    - un élément allongé (12, 22) de dimension caractéristique $d$ et dont la partie immergée est de longueur $\ell$, le rapport $D/d$ étant supérieur à 5 et ledit élément étant placé dans ledit canal, de façon à s'étendre sensiblement selon la direction longitudinale dudit canal, et sensiblement au centre du canal, et
    - des moyens de mesure (13, 23) de la force de friction ($f$) exercée sur les parois dudit élément allongé, lorsqu'un écoulement de fluide est mis en place dans ledit canal,
    - des moyens de déplacement en translation de l'élément allongé dans l'ouverture du canal, afin de mesurer les variations de la force de friction avec le positionnement dudit élément selon la dimension transverse.

6.  Viscosimètre selon la revendication 5, associé à des moyens assurant la circulation du fluide qui comprennent une pompe à débit imposé.

7.  Viscosimètre selon la revendication 5 ou 6, dans lequel ledit canal (14) est défini par l'espace libre entre deux plaques (10, 11) sensiblement parallèles.

8.  Viscosimètre selon l'une des revendications 5 à 7 dans lequel ledit canal (24) est défini par une cuve cylindrique (20).

9.  Viscosimètre selon l'une des revendications 5 à 8, dans lequel le canal et l'élément allongé sont à usage unique.

**Patentansprüche**

1.  Verfahren zur Messung der Viskosität eines Fluids, umfassend die folgenden Schritte:

    (a) Aufbauen einer Strömung des Fluids im laminaren Regime im Inneren eines Kanals (14, 24) mit charakteristischer transversaler Abmessung $D$, in welchem, im Wesentlichen entlang der longitudinalen Richtung des Kanals und im Wesentlichen in der Mitte des Kanals, ein längliches Element (12, 22) angeordnet ist, welches eine charakteristische Abmessung $d$ aufweist und von welchem ein Teil $\ell$ der Länge in dem Kanal versenkt ist, wobei das Verhältnis $D/d$ größer als 5 ist,
    (b) Messen der Reibungskraft ($f$), welche von dem Fluid auf die Wände des länglichen Elements ausgeübt wird,
    (c) Berechnen der dynamischen Viskosität ($\eta$) der Fluids ausgehend von der Beziehung:

$$(1)\ \ f = \lambda \eta \ell U\ ,$$

    wobei

*U* die mittlere Geschwindigkeit der Strömung ist und

λ ein Geometriefaktor ist,

wobei die Schritte (b) und (c) nacheinander durchgeführt werden für verschiedene Positionen des länglichen Elements in dem Kanal, entlang der charakteristischen Abmessung *D*.

2. Verfahren nach Anspruch 1, wobei die Schritte (a) bis (c) für einen einzigen Wert von $\overline{U}$ durchgeführt werden, wenn das Fluid Newtonsch ist.

3. Verfahren nach Anspruch 1, wobei die Schnitte (a) bis (c) nacheinander mit verschiedenen Werten von *U* durchgeführt werden, wenn das Fluid nicht-Newtonsch ist.

4. Verfahren nach einem der Ansprüche 1-3, **dadurch gekennzeichnet, dass** es kontinuierlich durchgeführt wird.

5. Viskosimeter, welches das Messverfahren nach einem der Ansprüche 1-4 durchführt, umfassend:

- einen Kanal (14, 24) mit charakteristischer Öffnung *D* und Länge *L,*
- ein längliches Element (12, 22), welches eine charakteristische abmessung *d* aufweiset und von welchem der versenkte Teil eine Länge ℓ aufweist, wobei das Verhältnis *D/d* größer als 5 ist und das Element in dem Kanal auf solche Weise, dass es sich im Wesentlichen entlang der longitudinalen Richtung des Kanals erstreckt, und im Wesentlichen in der Mitte des Kanals ungeordnet ist, und
- Mittel zur Messung (13, 23) der Reibungskraft (*f*), welche auf die Wände des länglichen Elements ausgeübt wird, wenn eine Strömung des Fluids in dem Kanal aufgebaut wird,
- Mittel zur Translationsverschiebung des länglichen Elements in der Öffnung des Kanals, um die Variationen der Reibungskraft mit der Positionierung der Elements entlang der transversalen Abmessung zu messen.

6. Viskosimeter nach Anspruch 5, welches mit die Zirkulation des Fluids gewährleistenden Mitteln verbunden ist, welche eine Pumpe mit vorgegebenen Durchsatz umfassen.

7. Viskosimeter nach Anspruch 5 oder 6, wobei der Kanal (14) definiert ist durch den Freiraum zwischen zwei im Wesentlichen parallelen Platten (10, 11).

8. Viskosimeter nach einem der Ansprüche 5-7, wobei der Kanal (24) durch einen zylindrischen Behälter (20) definiert ist.

9. Viskosimeter nach einem der Ansprüche 5-8, wobei der Kanal und das längliche Element zur Einweghutzung sind.

## Claims

1. A method of measuring the viscosity of a fluid, the method comprising the following steps:

a) establishing a flow of said fluid under laminar conditions inside a channel (14, 24) of characteristic transverse dimensions D, an elongate element (12, 22) of characteristic dimension d being placed in said channel substantially along its longitudinal direction and substantially at its center, a fraction ℓ of the length of the elongate element being immersed in said channel, the ratio D/d being greater than 5,
b) measuring the friction force (f) exerted by said fluid on the walls of said elongate element;
c) calculating the dynamic viscosity (η) of said fluid using the following equation:

$$ f = \lambda \eta \ell U \qquad\qquad (1) $$

where:

U is the mean speed of the flow; and
λ is a geometrical factor,

steps b) and c) being implemented in succession for different positions of said elongate element in said channel, along the characteristic transverse dimension D.

2. A method according to claim 1, wherein steps a) to c) are implemented for a single value of U, when the fluid is newtonian.

3. A method according to claim 1, wherein steps a) to c) are implemented successively using different values of U, when the fluid is non-newtonian.

4. A method according to any one of claims 1 to 3, wherein it is implemented continuously.

5. A viscosity meter implementing the measurement method according to any one of claims 1 to 4, and comprising:

a channel (14, 24) of characteristic opening D and of length L;
an elongate element (12, 22) of characteristic dimension $\underline{d}$ and having an immersed fraction of length $\ell$, the ratio D/d being greater than 5 and said element being placed in said channel in such a manner as to extend substantially along the longitudinal direction of said channel, substantially at the center of the channel; and measurement means (13, 23) for measuring the friction force ($\underline{f}$) exerted on the walls of said elongate element when a fluid flow is established in said channel,
means for moving the elongate element in translation in the opening of the channel in order to measure variations in the friction force with the position of said element along the transverse dimension.

6. A viscosity meter according to claim 5, associated with means for causing the fluid to circulate, said means comprising an imposed flow rate pump.

7. A viscosity meter according to claims 5 or 6, wherein said channel (14) is defined by the empty space between two substantially parallel plates (10, 11).

8. A viscosity meter according to any one of claims 5 to 7, wherein said channel (24) is defined by a cylindrical vessel (20).

9. A viscosity meter according to any one of clams 5 to 8, wherein the channel and the elongate element are elements for single use.

FIG.1

FIG.2

débit (mL.min⁻¹)

FIG.3

FIG.4

FIG.5

FIG.11

FIG.6

FIG.7

FIG.8

FIG.9

FIG.10

FIG.12

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4750351 A
- US 6755079 B

- WO 9838477 A